Europäisches Patentamt

European Patent Office

Office européen des brevets

(11) Numéro de publication: **0 267 118**
**A1**

## DEMANDE DE BREVET EUROPEEN

(21) Numéro de dépôt: 87402492.0

(22) Date de dépôt: 05.11.87

(51) Int. Cl.⁴: **B 65 G 59/10**
**B 65 B 35/12**

(30) Priorité: 07.11.86 FR 8615966

(43) Date de publication de la demande:
11.05.88 Bulletin 88/19

(84) Etats contractants désignés:
AT BE CH DE ES FR GB GR IT LI LU NL SE

(71) Demandeur: SERMAC SARL
13 Résidence bois des Montagnes
F-62131 Vaudricourt (FR)

(72) Inventeur: Le Coent, Rémi
16 rue du Vieux Moulin Bâtiment les Iris
F-77500 Chelles (FR)

(74) Mandataire: Ecrepont, Robert
Cabinet Ecrepont 12 Place Simon Vollant (Porte de Paris)
F-59800 Lille (FR)

(54) Dispositif de désempilage d'objets emboîtés.

(57) Dispositif permettant de désempiler des objets (2) notamment des plateaux, emboîtés les uns dans les autres et formant une pile (3) verticale, lesquels objets (2) sont désempilés un à un par le bas de la pile et présentent chacun des flancs inclinés (4) dont les faces internes (41) et externes (42) participent activement à l'emboîtement,

ce dispositif étant CARACTERISE en ce que, le moyen de détachement (6) de l'objet situé à la base de la pile (3) consiste en au moins un élément (61) porté par un organe d'actionnement (62) engendrant le déplacement de sa partie active (63) selon une trajectoire T qui, d'une part est sensiblement tangente à la face externe (42) du flanc (4) de l'objet immédiatement supérieur et, d'autre part, interfère avec le bord (43) du flanc incliné (4) de l'objet à détacher de la pile.

_Fig:3_

## Description

### DISPOSITIF DE DESEMPILAGE D'OBJETS EMBOITES

L'invention se rapporte à un dispositif de désempilage d'objets emboîtés les uns dans les autres et à l'installation équipée de ce dispositif.

Notamment mais non limitativement l'invention intéresse le domaine de l'emballage.

Dans ce domaine, il est courant de regrouper des articles tels des pots, des boîtes, sur des plateaux comportant des flancs puis de recouvrir l'ensemble ainsi formé d'une enveloppe par exemple constituée d'un film thermorétractable.

Dans les installations permettant de regrouper des articles sur des plateaux, les articles sont déposés sur les dits plateaux en un poste distinct de ceux de chargement des articles et des plateaux.

Généralement, les plateaux utilisés ont leurs flancs inclinés de manière à pouvoir être stockés en piles en étant emboîtés les uns dans les autres.

Malheureusement, de tels plateaux ainsi conditionnés s'avèrent relativement difficiles à séparer notamment de manière mécanisée.

Pour séparer des objets emboîtés les uns dans les autres, il est connu d'utiliser des dispositifs qui mettent en oeuvre des moyens permettant d'obtenir le désempilage mécanisé par le bas de la pile.

Avantageusement, cela permet d'obtenir le transfert par gravité tant de la pile que de l'objet qui en est détaché.

Outre un réceptacle, tel par exemple une goulotte qui permet de guider la pile d'objet, un tel dispositif comprend, d'une part deux moyens à action combinée dont un moyen dit de rétention et permettant de bloquer les objets situés au dessus de celui sur lequel agit un second moyen dit de détachement et, d'autre part, un moyen dit d'échappement et permettant d'assurer le déplacement pas à pas de toute la pile à l'issue du détachement d'un d'entre eux, chaque pas ayant globalement la valeur de l'espacement entre les fonds de ces objets.

Les dispositifs connus sont de préférence équipés de deux groupes de moyens précités disposés en vis à vis pour agir sur deux faces globalement opposées de la pile.

Les moyens de détachement connus ce jour sont prévus pour agir sur le bord accessible des objets empilés notamment selon une direction parallèle à celle de chute de l'objet détaché, c'est à dire globalement parallelement à la verticale du lieu.

Cette disposition convient bien pour les objets emboités qui présentent autour de leur zone d'emboitement une collerette périphérique située dans un plan sensiblement normal à leur direction d'emboîtement et/ou de déboitement.

Malheureusement, les plateaux plus avant décrits ne présentent pas une telle collerette et il est exclu d'agir uniquement de cette façon sur le bord accessible de leurs flancs inclinés.

On reproche également aux dispositifs connus de nécessiter un moyen moteur pour commander chacun des moyens actifs au déboîtement des objets, et, de ce fait, non seulement d'être gourmands en énergie mais en plus de nécessiter des moyens de synchronisation spécifiques aux moyens actifs précités.

Un résultat que l'invention vise à obtenir est un dispositif de désempilage d'objets emboîtés tels des plateaux à flancs inclinés qui ne présente pas les inconvénients précités.

A cet effet, l'invention a pour objet un dispositif du type précité notamment caractérisé en ce que le moyen de détachement de l'objet situé à la base de la pile consiste en au moins un élément porté par un organe d'actionnement engendrant le déplacement de sa partie active selon une trajectoire qui, d'une part est sensiblement tangente à la face externe du flanc de l'objet immédiatement supérieur et, d'autre part, interfère avec le bord du flanc incliné de l'objet à détacher de la pile.

L'invention sera bien comprise à l'aide de la description ci-après faite à titre d'exemple non limitatif en regard du dessin ci-annexé qui représente schématiquement :

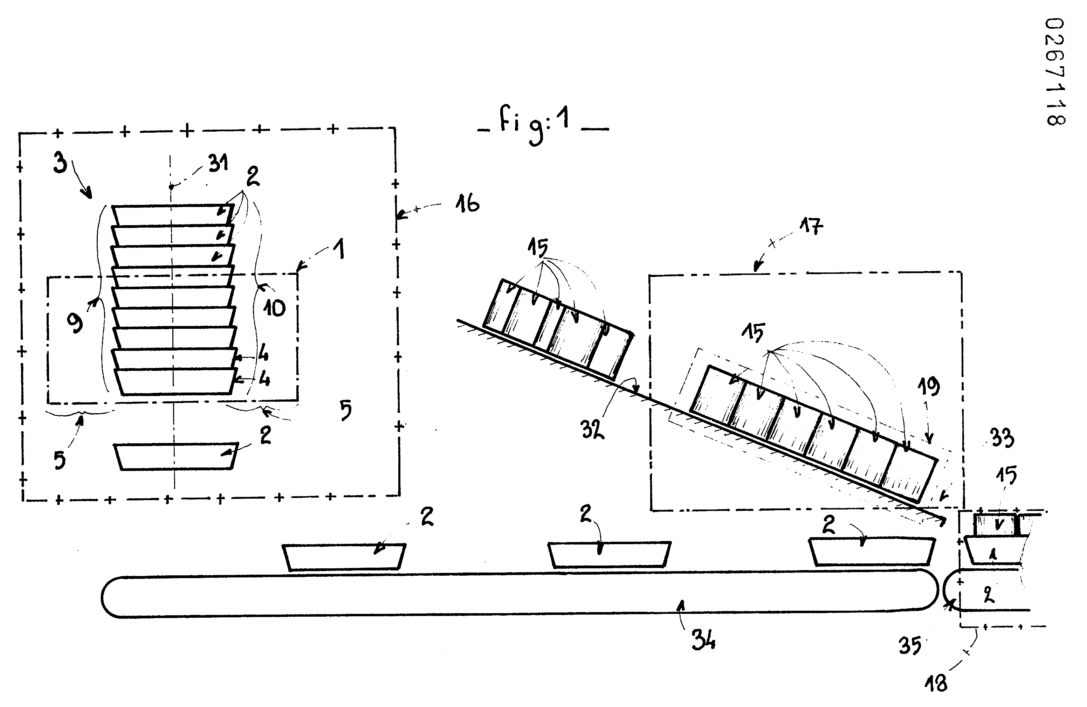

- figure 1 : une vue d'ensemble de l'installation équipée du dispositif de l'invention,

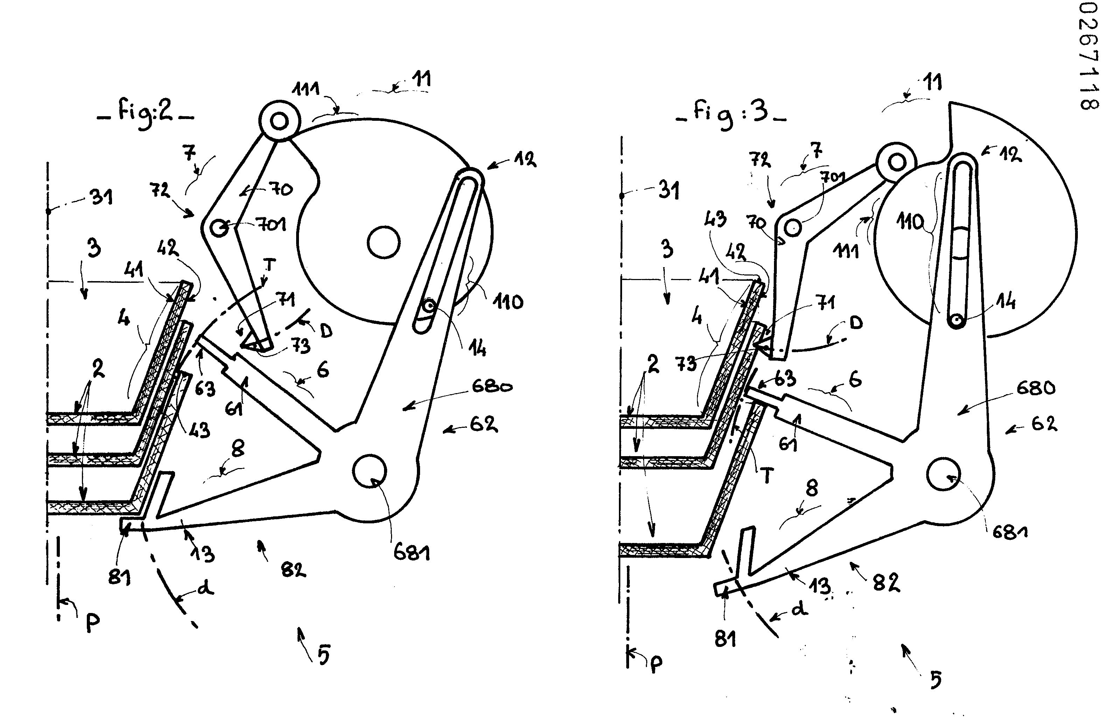

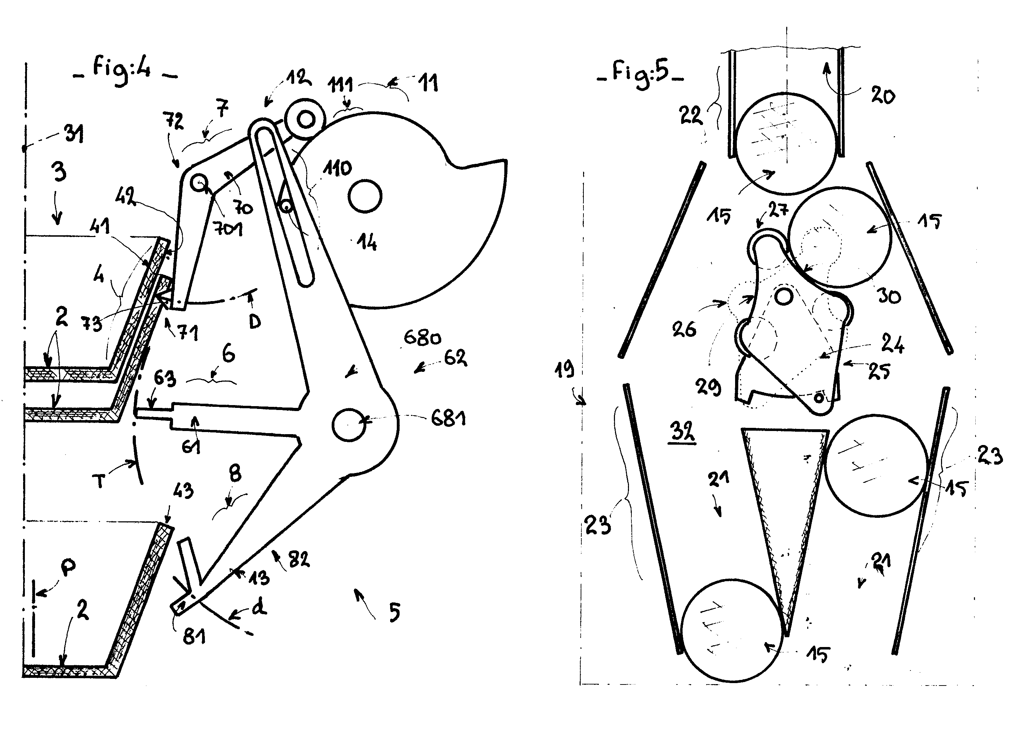

- figures 2 à 4 : à plus grande échelle et en coupe selon un plan sensiblement vertical, le dispositif de désempilage dans différentes phases de fonctionnement,

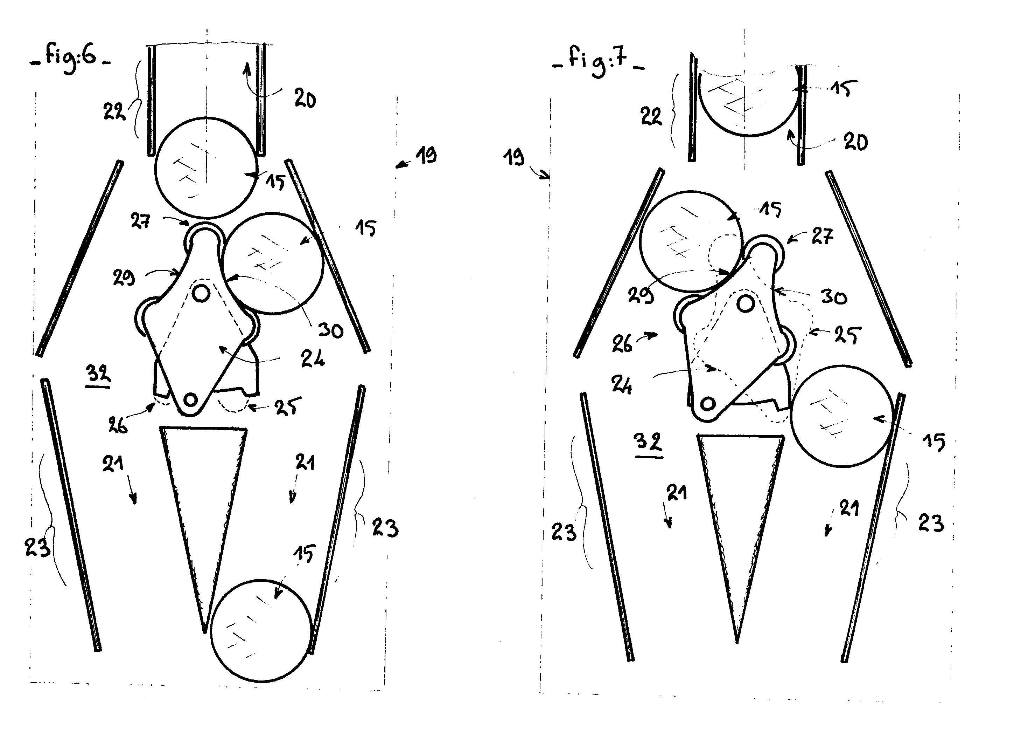

- figures 5 à 7 : vu de dessus, le moyen répartiteur également dans différentes phases de fonctionnement.

En se reportant au dessin, on voit un dispositif 1 permettant de désempiler des objets 2 emboîtés les uns dans les autres et formant une pile 3 sensiblement verticale, par la partie inférieure de laquelle sont prélevés les dits objets.

Les piles 3 proviennent classiquement d'un poste de chargement (non représenté) qui alimente alternativement le dispositif de désempilage, notamment par gravité.

Par exemple le dispositif d'alimentation permet d'une part de placer une pile en attente sensiblement au dessus du dispositif de désempilage et d'autre part de la libérer dans ce dispositif notamment par effacement de trappes au moment opportun et ce, de préférence avant l'épuisement de la pile en cours de désempilage.

Tel que cela est représenté, les objets 2 emboîtés présentent des flancs inclinés 4 dont les faces internes 41 et externes 42 participent activement à l'emboîtement.

Comme cela est également représenté, les objets 2 emboîtés consistent en des plateaux de conditionnement mais cela n'est nullement limitatif pour l'invention.

On note que, de manière connue, le dispositif de désempilage 1 comprend deux groupes 5 globalement identiques de moyens 6, 7, 8 qui sont disposés sensiblement en vis à vis de manière à agir symétriquement sur la pile c'est à dire globalement au niveau de deux faces 9, 10 parallèles de cette pile 3.

Ces moyens consistent pour chaque groupe 5 en

:
- un moyen dit de détachement 6 de l'objet situé à la base de la pile 3,
- un moyen dit de rétention 7 qui permet de bloquer tout mouvement des objets situés au dessus de celui devant être séparé de la pile pendant l'action du moyen 6,
-un moyen dit d'échappement 8 qui permet d'obtenir l'avancement de la pile d'une certaine valeur sensiblement à l'issue du détachement de l'objet situé à sa base,
- un moyen 11 de synchronisation des moyens 6, 7, 8 précités.

Selon une caractéristique essentielle de l'invention, le moyen de détachement 6 de l'objet situé à la base de la pile 3 consiste en au moins un élément 61 porté par un organe d'actionnement 62 engendrant le déplacement de sa partie active 63 selon une trajectoire T qui, d'une part est sensiblement tangente à la face externe 42 du flanc 4 de l'objet immédiatement supérieur et, d'autre part, interfére avec le bord 43 du flanc incliné 4 de l'objet à détacher de la pile.

Suivant l'invention, le moyen de rétention 7 des objets situés au dessus de celui devant être séparé de la pile consiste en un poinçon 71 porté par un organe d'actionnement 72 engendrant le déplacement de sa partie active 73, d'une part, selon une trajectoire D sensiblement normale à l'axe longitudinal 31 de la pile 3 d'objets et, d'autre part, de manière à permettre l'engagement local de la partie active 73 du dit poinçon au moins au niveau de la zone accessible du flanc 4 de l'objet immédiatement supérieur à celui détaché.

Le moyen d'échappement 8 consiste classiquement en une butée 81 quant à elle portée par un organe d'actionnement 82 engendrant son déplacement selon une trajectoire d sensiblement normale à l'axe longitudinal de la pile 3 de manière qu'en synchronisme avec les déplacements des moyens de détachement 6, de rétention 7, elle se situe tantôt sur la trajectoire P descendante de la pile et au moins au contact du dernier objet de cette pile, tantôt à l'extérieur de cette trajectoire.

De préférence la butée 81 est pourvue d'un moyen de réglage en position (non représenté) selon une direction parallèle à l'axe de la pile.

Conformément à une autre caractéristique de l'invention, l'organe d'actionnement 62 du moyen de détachement 6 et l'organe d'actionnement 82 du moyen d'échappement 8 consiste en un levier 680 articulé selon un axe 681 de position et d'orientation telle que, sous l'effet d'un moyen de commande cyclique 110, agissant sensiblement à l'une 12 des extrémités 12, 13 du dit levier, d'une part, la butée 81 portée à son autre extrémité 13 se déplace selon la trajectoire d prédéfinie et, d'autre part, l'élément 61 de détachement en étant porté par le levier 680 au niveau de son articulation 681 ait sa partie active 63 qui se déplace cycliquement selon la trajectoire T également prédéfinie.

Le moyen de rétention 7 est, lui, indépendant du levier 680 précité mais également placé sous l'effet d'un moyen de commande cyclique 111 qui induit son déplacement selon la trajectoire D également prédéfinie notamment par le biais d'un levier 70 articulé autour d'un axe 701 convenablement orienté.

Selon l'invention, tant le moyen de commande cyclique 110 induisant l'oscillation du levier 680 auquel sont associés les moyens de détachement 6 et d'échappement 8, que le moyen de commande cyclique 111 qui induit le déplacement du moyen de rétention 7 sont constitués par un même moyen moteur 11 ce qui en outre assure leur synchronisation.

Dans un mode préféré de réalisation, le moyen moteur 11 consiste en une came plate entraînée en rotation par un moyen à cet effet et d'une part dont le profil est étudié pour commander par une de ses extrémités le levier 70 d'actionnement du poinçon pendant la phase de rétention les objets et, d'autre part, sur l'une des faces de laquelle se trouve implanté un téton 14 qui commande le levier d'actionnement 680 des moyens d'arrêt en translation 8 et de détachement 6 notamment par l'extrémité 12 du dit levier.

Pour coopérer avec la came, l'extrémité associée du levier 70 est équipée d'un galet et le dit levier est sollicité par un organe élastique (non représenté) qui tend à plaquer le galet contre le profil de cette came.

Quant à l'extrémité 12 du levier 680, elle est quant à elle équipée d'une rainure longiligne avec laquelle coopère le téton 14.

Pour obtenir le détachement de l'objet 2 situé à la base de la pile, il suffit de commander la rotation de la came notamment sur un tour.

Par sa forme appropriée, la came commande :
- dans un premier temps, la pénétration d'un poinçon dans le flanc en vis à vis de l'avant dernier objet, laquelle action est maintenue pendant que, dans un second temps, sous l'effet de l'oscillation du levier 680 actionné par le téton 14 s'effectue sensiblement simultanément l'effacement de la butée d'arrêt en translation et le dégagement d'un objet puis,
- dans un troisième temps, à l'issue du dégagement de l'objet, la rotation de la came commande bien entendu l'effacement du moyen de dégagement d'un objet mais encore sensiblement simultanément le retour en position de la butée d'arrêt en translation et le dégagement du poinçon afin d'obtenir l'avancement de la pile d'un pas.

Comme cela a été évoqué, le dispositif de désempilage équipe de prférence une installation de conditionnement automatique d'articles 15 sur des plateaux 2.

Tel que cela est représenté, cette installation comprend principalement :
- un poste de désempilage 16 des plateaux 2 auquel les piles 3 de plateaux 2 peuvent d'ailleurs être amenées par des moyens de convoyage dont l'action est régie de manière connue selon la présence de plateaux dans le dit dispositif de désempilage et,
- un poste de regroupement 17 permettant comme son nom l'indique de regrouper les articles 15 à conditionner en nombre suffisant et selon un agencement approprié avant qu'à un autre poste ils soient déposés sur un plateau 2 et donc,
- un poste de dépose 18 des articles 15 convenablement regroupés sur chacun des plateaux se présentant à ce poste 18.

En plus de la solution au désempilage des plateaux emboîtés 2, l'invention se propose d'apporter une solution au regroupement d'articles 15 sensiblement cylindriques tels des pots, des boites, par groupe de nombre et d'agencement adapté aux plateaux destinés à les recevoir et, par exemple, en plusieurs rangées d'un certain nombre d'articles.

En effet, les articles 15 à conditionner sont généralement amenés à l'installation de regroupement soit en une file issue par exemple d'une autre installation de traitement ou de plusieurs autres installations du type précité.

Aussi, il faut donc commencer par former autant de files d'articles que de rangées à constituer sur le plateau afin qu'au moment de la dépose sur le dit plateau, il suffise de commander par file constituée, le départ du nombre d'articles désirés par rangée.

S'il est relativement aisé de former une file d'articles à partir d'articles disposés anarchiquement sur une surface, en revanche, il est plus délicat de former plusieurs files d'articles avec une répartition homogène du nombre d'articles sur chaque file, à partir d'une seule file et à fortiori directement à partir d'articles disposés anarchiquement sur une surface.

L'invention propose un moyen répartiteur 19 qui, à partir d'une file 20 d'articles, permet de former, sans autre action mécanique que celles induites par le passage des dits articles au droit de chaque moyen répartiteur, au moins deux autres files 21 et ce avec un répartition homogène du nombre d'articles sur chaque file.

Pour obtenir autant de files que nécessaires, il suffit bien entendu d'agencer une pluralité de moyens répartiteurs de manière à scinder chaque file formée en deux autres files.

Conformément à l'invention, outre un couloir 22 d'amenée d'une file 20 et des couloirs d'évacuation 23 de files formées, chaque moyen répartiteur 19 comprend, en saillie par rapport à la surface de déplacement des articles, au moins un élément 24 librement articulé entre deux positions limites 25, 26 dans chacune desquelles d'une part au moins une butée 27 qu'il comporte à sa partie frontale se déplace de part et d'autre de l'axe de la file d'arrivée 20 des articles notamment du couloir d'arrivée pour commander leur passage vers l'un ou l'autre des couloirs d'évacuation 23 et, d'autre part, au moins deux faces 29, 30 qui de part et d'autre de la butée frontale divergent globalement dans le sens d'avancement des articles 3 et à l'encontre desquelles chaque article agit au moment de son passage vers les couloirs d'évacuation 23 pour, sensiblement à l'issue de ce passage, provoquer le basculement de l'élément 24 d'une position limite 25 dans la position limite opposée 26.

De préférence, la butée frontale de l'élément 24 est formé par un galet libre en rotation autour d'un axe sensiblement parallèle à celui d'oscillation du dit élément 24.

De préférence, les articles de chaque file d'arrivée 20 seront suffisamment espacés pour permettre le fonctionnement optimal des moyens répartiteurs 19 asssociés à cette file.

Avantageusement, les articles disposés en files parallèles par les moyens répartiteurs 19 plus avant décrits se déplacent sur un plan incliné 32 dont l'extrémité 33 surplombe un transporteur 34 qui permet d'acheminer les plateaux 2 détachés de la pile au moins jusqu'au niveau de cette extrémité du dit plan incliné.

C'est à ce niveau que les articles 15 sont chargés sur les plateaux notamment par groupes de taille prédéfinie.

Pour délivrer un certain nombre de ces articles 15, notamment en fonction de la taille des plateaux, on utilise au niveau de chaque file 21, un dispositif dit d'échappement (non représenté) et par exemple un dispositif à levier basculant connu de l'homme de l'art.

De préférence le poste 18 comprend, pour supporter les plateaux, un transporteur 35 à courroies élastiques. De cette manière les vibrations imprimées aux courroies par la chute des articles dans le plateau parachèvent leur positionnement dans ce plateau.

## Revendications

1. Dispositif (1) permettant de désempiler des objets (2) notamment des plateaux, emboîtés les uns dans les autres et formant une pile (3) d'axe (31) sensiblement vertical, lesquels objets (2) sont désempilés un à un par le bas de la pile et présentent chacun des flancs inclinés (4) dont les faces internes (41) et externes (42) participent activement à l'emboîtement,
lequel dispotif de désempilage comporte deux groupes (5) globalement identiques de moyens (6, 7, 8) qui sont disposés sensiblement en vis à vis de manière à agir symétriquement sur la pile c'est à dire globalement au niveau de deux faces (9, 10) parallèles de cette pile (3), chacun de ces groupes comprenant :
- un moyen de détachement de l'objet (6) situé à la base de la pile (3),
- un moyen dit de rétention (7) qui permet de bloquer tout mouvement des objets situés au dessus de celui devant être détaché et ce au moins pendant l'action du moyen à cet effet,
- un moyen dit d'échappement (8) qui permet d'obtenir l'avancement de la pile d'une certaine valeur sensiblement à l'issue du détachement d'un objet de sa base,
- un moyen (11) de synchronisation des divers moyens précités, ce dispositif étant **CARACTERISE** en ce que, le moyen de détachement (6) de l'objet situé à la base de la pile (3) consiste en au moins un élément (61) porté par un organe d'actionnement (62) engendrant le déplacement de sa partie active (63) selon une trajectoire T qui, d'une part est sensiblement tangente à la face externe (42) du flanc (4) de l'objet immédiatement supérieur et, d'autre part, interfère avec le bord (43) du flanc incliné (4) de l'objet à détacher de la pile.

2. Dispositif selon la revendication (1) caractérisé en ce que le moyen de rétention (7) des objets situés au dessus de celui devant être séparé de la pile consiste en un poinçon (71) porté par un organe d'actionnement (72) engendrant le déplacement de sa partie active (73), d'une part, selon une trajectoire D sensiblement normale à l'axe longitudinal (31) de la pile (3) d'objets et, d'autre, part, de manière à permettre l'engagement local de la partie active (73) du dit poinçon au moins au niveau de la zone accessible du flanc (4) de l'objet immédiatement supérieur à celui détaché.

3. Dispositif selon la revendication 1 caractérisé en ce que l'organe d'actionnement (62) du moyen de détachement (6) et l'organe d'actionnement (82) du moyen d'échappement (8) consiste en un levier (680) articulé selon un axe (681) de position et d'orientation telle que, sous l'effet d'un moyen de commande cyclique (110), agissant sensiblement à l'une (12) des extrémités (12, 13) du dit levier, d'une part, la butée (81) portée à son autre extrémité (13) se déplace selon la trajectoire d prédéfinie et, d'autre part, l'élément (61) de détachement en étant porté par le levier (680) au niveau de son articulation (681) ait sa partie active (63) qui se déplace cycliquement selon la trajectoire T également prédéfinie.

4. Dispositif selon l'un quelconque des revendications 1 à 3 caractérisé en ce que tant le moyen de commande cyclique (110) induisant l'oscillation du levier (680) auquel sont associés les moyens de détachement (6) et d'échappement (8), que le moyen de commande cyclique (111) qui induit le déplacement du moyen de rétention (7) sont constitués par un même moyen moteur (11) ce qui en outre assure leur synchronisation.

5. Installation caractérisé en ce qu'elle est équipée d'un dispositif selon la revendication 1.

6. Installation selon la revendication (5) comprenant un poste de désempilage de plateaux, un poste de regroupement d'articles équipé de moyens répartiteurs, un poste de dépose de groupes d'articles sur chaque plateau désempilé, cette installation étant caractérisée en ce que outre un couloir (22) d'amenée d'une file (20) et des couloirs d'évacuation (23) de files formées, chaque moyen répartiteur (19) du poste de regroupement d'articles comprend, en saillie par rapport à la surface de déplacement des articles, au moins un élément (24) librement articulé entre deux positions limites (25, 26) dans chacune desquelles d'une part au moins une butée (27) qu'il comporte à sa partie frontale se déplace de part et d'autre de l'axe de la file d'arrivée (20) des articles notamment du couloir d'arrivée pour commander leur passage vers l'un ou l'autre des couloirs d'évacuation (23) et, d'autre part, au moins deux faces (29, 30) qui de part et d'autre de la butée frontale divergent globalement dans le sens d'avancement des articles (3) et à l'encontre desquelles chaque article agit au moment de son passage vers les couloirs d'évacuation (23) pour, sensiblement à l'issue de ce passage, provoquer le basculement de l'élément (24) d'une position limite (25) dans la position limite opposée (26).

0267118

— fig.1 —

0267118

0267118

Fig:5

Fig:4

0267118

- Fig.7 -

- Fig.6 -

Office européen
des brevets

**RAPPORT DE RECHERCHE EUROPEENNE**

Numero de la demande

EP 87 40 2492

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 318 721 (E. SCHMITZ)<br>* En entier * | 1,5 | B 65 G 59/10<br>B 65 B 35/12 |
| Y |  | 2,3,6 | |
|  | --- | | |
| Y | US-A-3 927 799 (R.J. TINDLEY)<br>* Figures 2-5; colonne 3, ligne 60 - colonne 7, ligne 22 * | 2 | |
| A |  | 1,3,5 | |
|  | --- | | |
| Y | US-A-3 795 346 (T.V. ROBERTS)<br>* Figures 1,2,6-8; colonne 1, ligne 55 - colonne 3, ligne 4; colonne 3, lignes 13-43 * | 3 | |
| A |  | 1,2,5 | |
|  | --- | | |
| Y | US-A-2 052 513 (W.D. KIMBALL)<br>* Figures 1,2; page 2, colonne de gauche, ligne 27 - page 3, colonne de droite, ligne 19 * | 6 | |
|  | --- | | DOMAINES TECHNIQUES RECHERCHES (Int. Cl.4) |
| A | FR-A-2 203 356 (M. PAGET)<br>* En entier * | 6 | B 65 G<br>B 65 B |
|  | ----- | | |

Le présent rapport a été établi pour toutes les revendications

| Lieu de la recherche | Date d'achèvement de la recherche | Examinateur |
|---|---|---|
| LA HAYE | 21-01-1988 | WERNER D.M. |